# DEMANDE DE BREVET EUROPEEN

(11) **EP 0 660 047 A1**
(43) Date de publication de la demande: **28.06.1995**
(21) Numéro de dépôt: 94402791.1
(22) Date de dépôt: 06.12.1994
(51) Int. Cl.: F24C 7/08

(54) **Procédé de dialogue entre un utilisateur et un appareil électroménager et un appareil électroménager mettant en oeuvre un tel procédé**

(30) Priorité: 23.12.1993 FR 9315603
(71) Demandeur: MOULINEX S.A., F-75008 Paris (FR)
(72) Inventeur: Arroubi, Mustapha, F-14120 Lully (FR)
(74) Mandataire: Busquets, Jean-Pierre

(57) **Abrégé**

L'invention concerne un procédé destiné à permettre le dialogue entre un utilisateur et un appareil électroménager comportant un micro-processeur (2) gérant des données d'instructions préalablement introduites dans une mémoire (3).

Selon l'invention, ce procédé consiste :
- à identifier dans un catologue de données d'instructions un code approprié à une donnée d'instruction choisie;
- à introduire par une interface utilisateur-appareil (4) ledit code dans le micro-processeur (2);
- à traiter ledit code pour corréler la donnée d'instruction correspondante;
- à extraire de la mémoire (3) la donnée d'instruction correspondant audit code;
- à transmettre ladite donnée d'instruction à l'utilisateur au moyen d'un dispositif de traduction sonore ou visuel (5).

L'invention s'applique aux appareils électroménagers.

## Description

L'invention se rapporte aux appareils électroménagers tels que, par exemple, les robots culinaires, les fours de cuisson, les cafetières et les appareils de traitement de l'air.

Chaque type d'appareils comporte des manuels d'utilisation très complexes et volumineux. Certains appareils tels que les robots culinaires et les fours de cuisson sont utilisés également avec des livres de recettes de plus en plus nombreux et fastidieux à compulser.

Contrairement au but souhaité, tous ces éléments d'informations contribuent à rendre difficile et incommode l'utilisation des appareils et requièrent un encombrement certain pour le rangement de tous ces ouvrages.

D'autre part, la mise à jour est malaisée et pratiquement non pratiquée par les utilisateurs.

Le but de l'invention est de remédier aux inconvénients précités en mettant en oeuvre un procédé de dialogue entre un utilisateur et un appareil électroménager augmentant la convivialité.

Selon l'invention, le procédé consiste :
- à identifier dans un catalogue de données d'instructions un code approprié à une donnée d'instruction choisie ;
- à introduire par une interface utilisateur-appareil ledit code dans le micro-processeur ;
- à traiter ledit code pour corréler la donnée d'instruction correspondante ;
- à extraire de la mémoire la donnée d'instruction correspondant audit code ;
- à transmettre ladite donnée d'instruction à l'utilisateur au moyen d'un dispositif de traduction sonore ou visuel.

Grâce au procédé selon l'invention, un utilisateur, par un simple dialogue avec l'interface utilisateur-appareil, visualise ou écoute toute information nécessaire soit à l'utilisation dudit appareil, soit à la réalisation d'une recette particulière à partir dudit appareil.

Lors du dialogue avec l'interface, l'utilisateur choisit un code correspondant à une utilisation choisie et déclenche l'activation du micro-processeur pour que ce dernier lui transmette les informations nécessaires à la bonne utilisation choisie.

Les caractéristiques et avantages de l'invention ressortiront d'ailleurs de la description qui va suivre, à titre d'exemple, en référence aux dessins annexés dans lesquels :
- la figure 1 une représentation schématique illustrant des moyens de traitement d'informations selon l'invention et destinés à équiper par exemple un appareil électroménager ;
- la figure 2 est un schéma fonctionnel illustrant sous forme de blocs le procédé selon l'invention.

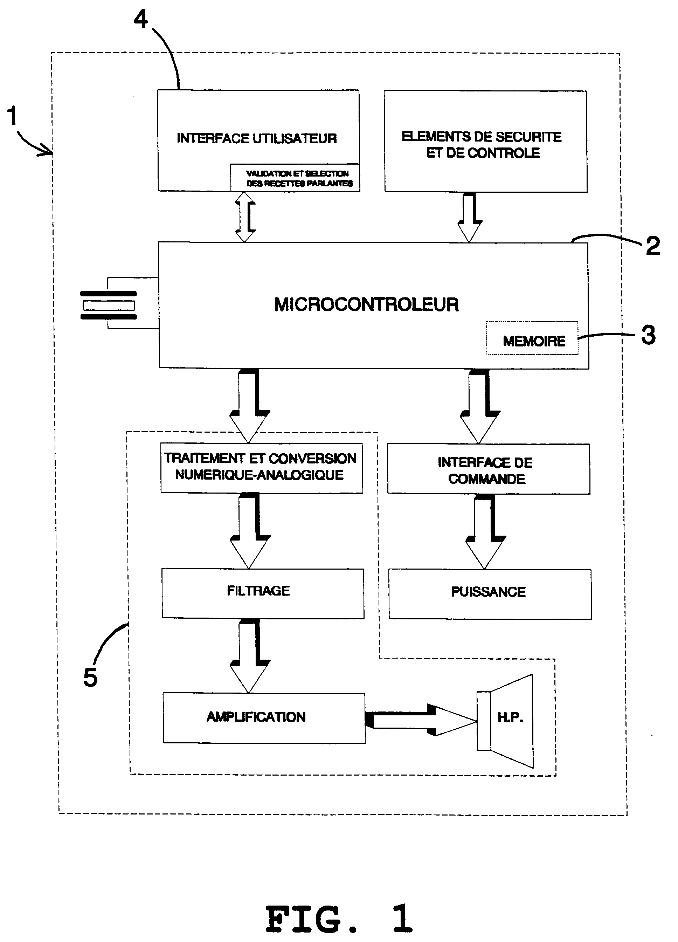

Selon la figure 1, un appareil électroménager comporte des moyens de traitement de l'information 1 qui comprennent un micro-processeur principal 2 gérant des données d'instructions préalablement introduites dans au moins une mémoire 3. Ladite mémoire 3 comporte des messages constitués chacun de N modules, chaque module contenant des mots, groupes de mots ou phrases.

Le micro-processeur principal 2 est connecté, d'une part, à une interface utilisateur-appareil 4 et, d'autre part, à un dispositif de traduction sonore ou visuel 5.

Dans un exemple de réalisation, l'interface utilisateur utilisateur-appareil est constituée d'un dispositif de reconnaissance comprenant un clavier comportant entre autres une touche de sélection constituant un premier moyen d'activation, une touche d'avancement constituant un deuxième moyen d'activation et une touche de recul constituant un troisième moyen d'activation.

Le dispositif de traduction sonore ou visuel 5 comprend des moyens de conversion numérique/analogique des données émises et des moyens de transcription desdites données vers l'utilisateur.

Lesdits moyens de transcription sont constitués entre autres par un haut-parleur.

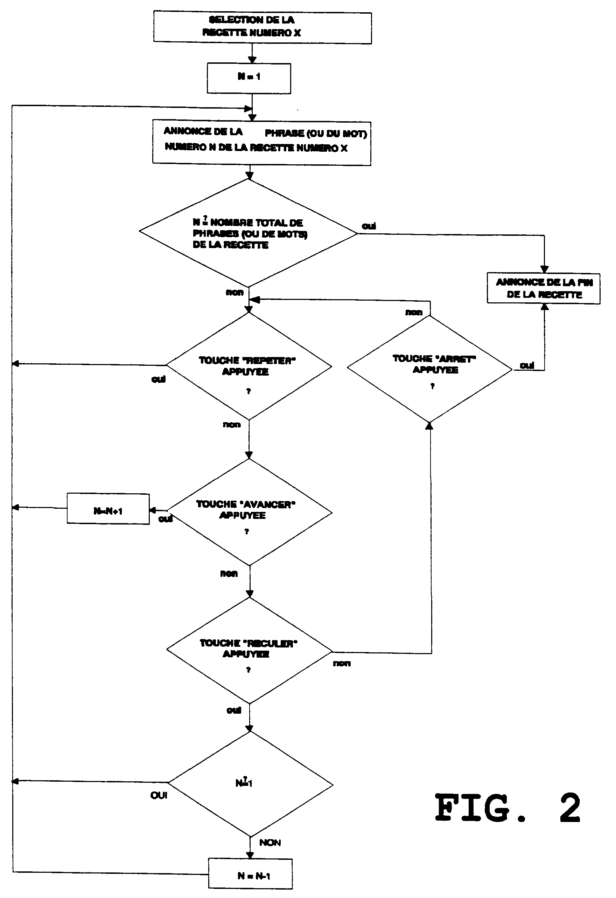

Afin d'illustrer le procédé selon l'invention, on a représenté sur la figure 2 un organigramme relatif à une sélection de recettes .Bien entendu, ce procédé s'applique également à une sélection d'instructions d'utilisation.

Dans un premier temps, après que l'utilisateur ait choisi une recette illustrée par exemple dans un catalogue du type livre comprenant de nombreuses recettes, l'utilisateur introduit par activation de la touche "sélection" le code qui correspond à la recette choisie.

Le micro-processeur traite ledit code pour identifier la donnée d'instruction correspondante contenue dans la mémoire et ledit micro-processeur extrait la donnée d'instruction correspondant audit code et capture le nombre N de modules formant le message sélectionné. Le micro-processeur dénombre les modules constituant le message choisi et transmet le premier module du message à l'utilisateur au moyen du dispositif de traduction sonore ou visuel.

Puis, le micro-processeur compte le nombre M de modules transmis à l'utilisateur et teste ce nombre M. Si le nombre N des modules à transmettre est égal au nombre M des modules transmis, la transmission du message est terminée et le micro-processeur transmet au moyen du dispositif de traduction sonore ou visuel une annonce de la fin du message. Si le nombre N de modules à transmettre n'est pas égal au nombre M des modules transmis, l'utilisateur choisit soit de répéter le message déjà transmis en appuyant sur la touche "répéter" soit de poursuivre la transmission des autres modules constituant le message choisi en appuyant sur la touche "avancer", soit de revenir sur le module précédant le dernier module transmis en appuyant sur la touche "reculer".

Si l'utilisateur appuie sur la touche "répéter", le micro-processeur retourne sur le dernier message transmis et redéclenche à nouveau la transmission du module par le dispositif de traduction sonore ou visuel.

Si l'utilisateur appuie sur la touche "avancer", le micro-processeur passe au module suivant en incrémentant par exemple le nombre M de modules transmis. Le micro-processeur transmet le nouveau module du message à l'utilisateur au moyen du dispositif de traduction sonore. Le micro-processeur teste de nouveau le nombre M des modules transmis en reprenant la même opération que celle décrite précédemment.

Si l'utilisateur appuie sur la touche "reculer", le micro-processeur teste le nombre de modules transmis. Si le nombre de modules transmis est égal à 1, le microprocesseur déclenche une opération correspondant à l'activation de la touche "repéter". Si le nombre de modules transmis n'est pas égal à 1, le micro-processeur revient au module précédent en décrémentant le nombre de modules transmis. Le micro-processeur transmet donc le module précédent par le dispositif de traduction sonore ou visuel, et teste de nouveau le nombre M de modules transmis avec le nombre N de modules à transmettre comme expliqué précédemment.

Si l'utilisateur n'appuie sur aucune des trois touches "répéter", "avancer" ou "reculer" lorsque le nombre N de modules à transmettre n'est pas égal au nombre M de modules transmis, le micro-processeur attend soit l'activation d'une des trois touches pour poursuivre le déroulement de la lecture totale du message, soit l'activation d'une touche "arrêt" pour arrêter définitivement le déroulement de la lecture du message.

Dans un exemple particulier relatif à une recette d'un quatre-quart figurant dans un catalogue de cuisine,le code correspondant à cette recette est le numéro 3. L'utilisateur sélectionne sur l'interface utilisateur le numéro 3.Le micro-processeur traite ledit numero 3 et va chercher dans sa mémoire les informations relatives à la recette d'un quatre-quarts. La recette dudit quatre-quarts est constitué d'un message contenant neuf modules:
1-Prenez 4 oeufs et pesez les;
2-Prenez le même poids en sucre ;
3-Prenez le même poids en beurre;
4-Prenez le même poids en farine;
5-Battez les blancs en neige;
6-Faites fondre le beurre;
7-Mettre le mélange dans le bol du robot;
8-Régler la vitesse du robot;
9-Metrre dans le four.

Comme on le comprendra, on peut revenir en arrière dans la recette en activant la touche "reculer" et reprendre ensuite le déroulement normal du dialogue avec l'appareil.

## Revendications

1. Procédé destiné à permettre le dialogue entre un utilisateur et un appareil électroménager comportant un micro-processeur(2) gérant des données d'instructions préalablement introduites dans au moins une mémoire (3),
**caractérisé en ce qu'**il consiste :
- à identifier dans un catalogue de données d'instructions un code approprié à une donnée d'instruction choisie ;
- à introduire par une interface utilisateur-appareil (4) ledit code dans le micro-processeur (2) ;
- à traiter ledit code pour corréler la donnée d'instruction correspondante ;
- à extraire de la mémoire (3) la donnée d'instruction correspondant audit code ;
- à transmettre ladite donnée d'instruction à l'utilisateur au moyen d'un dispositif de traduction sonore ou visuel (5).

2. Procédé selon la revendication 1,
**caractérisé en ce que** les données d'instruction comprenant des messages constitués chacun de N modules, on extrait de la mémoire (3) chacun des modules du message choisi et on transmet lesdits modules de façon successive par une suite d'activation répétée de l'interface utilisateur-appareil (4).

3. Procédé selon la revendication 2,
**caractérisé en ce qu'**on capture le nombre N de modules du message sélectionné que le code, on dénombre les modules constituant le message, on transmet le premier module du message, on compte le nombre M de modules transmis à l'utilisateur, on vérifie si le nombre N capturé est égal au nombre M des modules transmis, dans l'affirmative on arrête la transmission du message et dans la négative on continue à émettre les modules non transmis du message.

4. Procédé selon la revendication 3,
**caractérisé en ce que** le message n'étant pas totalement transmis, on choisit soit de répéter le message déjà transmis par un premier moyen d'activation de l'interface utilisateur-appareil (4), soit de poursuivre la transmission des autres modules constituant le message choisi par un deuxième moyen d'activation de l'interface utilisateur-appareil (4) ou soit de revenir sur le module précédant le dernier module transmis par un troisième moyen d'activation de l'interface utilisateur-appareil (4).

5. Appareil électroménager destiné à mettre en oeuvre le procédé conforme à l'une des revendications 1 à 4,
**caractérisé en ce que** l'interface utilisateur-appareil (4) est constitué d'un dispositif de reconnaissance intégré à l'appareil et relié au micro-processeur (2) et en ce que le dispositif de traduction sonore ou visuel (5) comprend des moyens de conversion numérique/analogique des données émises par le microprocesseur (2) et des moyens de transcription desdites données vers l'utilisateur.

6. Appareil électroménager selon la revendication 5,
**caractérisé en ce que** le dispositif de reconnaissance comprend un clavier comportant entre autres une touche de sélection, pour introduire le code sélectionné, une touche de sélection, une touche de répétition constituant le premier moyen d'activation, une touche d'avancement constituant le deuxième moyen d'activation et une touche de recul constituant le troisième moyen d'activation.

7. Appareil électroménager selon la revendication 5,
**caractérisé en ce que** les moyens de transcription sont constitués entre autres par un haut-parleur.

8. Appareil électroménager selon la revendication 5,
**caractérisé en ce que** les messages comportent des recettes de cuisine.

9. Appareil électroménager selon la revendication 5,
**caractérisé en ce que** les messages comportent des instructions d'utilisation.
